(19) Europäisches Patentamt
European Patent Office
Office européen des brevets

(11) Numéro de publication: **0 544 363 B1**

(12) # FASCICULE DE BREVET EUROPEEN

(45) Date de publication de fascicule du brevet: **19.04.95**

(21) Numéro de dépôt: **92203555.5**

(22) Date de dépôt: **19.11.92**

(51) Int. Cl.[6]: **A01N 43/16**, C09D 5/14, C09D 5/04, C09D 7/00, A23L 3/3481, A23G 3/00, A23L 1/052

(54) **Procédé de traitement d'un milieu notamment aqueux en vue d'obtenir un effet fongistatique, et applications.**

(30) Priorité: **26.11.91 FR 9114973**

(43) Date de publication de la demande:
**02.06.93 Bulletin 93/22**

(45) Mention de la délivrance du brevet:
**19.04.95 Bulletin 95/16**

(84) Etats contractants désignés:
**DE ES FR GR IT PT**

(56) Documents cités:
**US-A- 4 603 006**

**CENTRAL PATENTS INDEX, BASIC ABSTRACTS JOURNAL Section Ch, Week 7648, Derwent Publications Ltd., London, GB; Class C, AN 89975X**

(73) Titulaire: **ORGANISATION NATIONALE INTERPROFESSIONNELLE DES OLEAGINEUX- ONIDOL**
**12, avenue George V**
**F-75008 Paris (FR)**

(72) Inventeur: **Bazus, Anne**
**8 avenue Frizac**
**F-31400 Toulouse (FR)**
Inventeur: **Gaset, Antoine**
**75 allée de Brienne**
**F-31000 Toulouse (FR)**
Inventeur: **Jamet, Jean-Paul**
**15 rue Beccaria**
**F-75012 Paris (FR)**
Inventeur: **Linas, Marie-Denise**
**33 avenue des Avions**
**F-31400 Toulouse (FR)**
Inventeur: **Rigal, Luc**
**24 chemin Bellevue**
**F-31240 Saint Jean l'Union (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 544 363 B1

**CHEMICAL ABSTRACTS, vol. 115, no. 20, 18 Octobre 1991, Columbus, Ohio, US; abstract no. 210570, Z.HROMAKOVA ET. AL. 'Rheological prpoerties of beechwood xylan' page 145 ;**

Inventeur: **Wermeesh, Georges**
**148 rue Lourmel**
**F-75015 Paris (FR)**

(74) Mandataire: **Barre, Philippe**
**Cabinet Barre Laforgue et associés**
**95 rue des Amidonniers**
**F-31000 Toulouse (FR)**

## Description

L'invention concerne un procédé de traitement d'un milieu en vue d'inhiber la reproduction des fongis dans ledit milieu. L'invention s'applique en particulier pour traiter certains milieux aqueux alimentaires (tels que desserts sucrés, assaisonnements, plats cuisinés ...) ou pour traiter des produits de protection ou d'enduction de surface en dispersion aqueuse (peintures à l'eau, gouaches ...) ou encore pour traiter des colles à l'eau (colles à l'amidon ...) ou des produits d'encollage textile (dits produits "d'ensimage").

Certains milieux et en particulier les milieux aqueux favorisent le développement des fongis, lesquels peuvent dénaturer ces milieux et les rendre impropres à leur fonction ; par exemple, les milieux alimentaires sucrés constituent des milieux de culture pour les fongis tels que Aspergillus, Cladosporium, Alternaria, Penicillium ..., et à température ambiante, deviennent impropres à la consommation au terme de courte durée de conservation.

Il existe actuellement des produits à effet fongicide (certains conservateurs dans le domaine alimentaire, additifs fongicides pour les peintures ...) qui sont des produits de synthèse le plus souvent toxiques (acide benzoïque et ses sels, nitrates et nitrites, benzimidazoles, organo-métalliques ...) : leur effet fongicide est lié à leur toxicité de sorte que, lors de leur utilisation, il faut trouver un difficile compromis entre une efficacité satisfaisante et une toxicité aussi faible que possible. De plus, ces produits sont fongicides, c'est-à-dire capables de détruire des fongis présents dans le milieu au moment de l'addition, mais non fongistatiques aux doses autorisées, c'est-à-dire non capables de s'opposer de façon durable au développement ultérieur des fongis dans le milieu ; par exemple, dans les peintures, les produits fongicides ont généralement une action ayant une durée limitée de l'ordre de deux ou trois ans.

La présente invention se propose de fournir un procédé de traitement non toxique d'un milieu, qui assure une inhibition de la reproduction des fongis. A cet effet, le procédé de l'invention consiste à mélanger audit milieu une proportion pondérale comprise entre 1 % et 15 % de glucuronoxylane de motif :

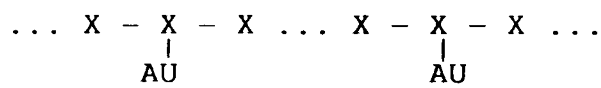

dans lequel X est le xylose et AU un acide glucuronique ou un sel glucuronique, la fréquence -n- de substitution de la chaîne xylanique par l'acide ou le sel glucuronique

$$\left(n = \frac{\text{nombre de X}}{\text{nombre de AU}}\right)$$

étant comprise entre 3 et 9, le glucuronoxylane étant ajouté au milieu à traiter sous la forme d'une solution aqueuse lorsque ledit milieu ne contient pas d'eau.

Le glucuronoxylane est un composé connu en lui-même sur le plan scientifique (article de journal russe "Study of xylouronide from sunflower husk hemicelluloses", Pavlova, T.A. Sharkov. V. I., Mater. Nauch.-Tekh. Konfer. Leningrad. Lesotekh. Akad. part 56-60 (1968) ; article "Conrad Schuerch, The hemicelluloses, the chemistry of wood, 1975, p. 216-217). Le "Chemical Abstracts, vol. 115, n° 20, 18 octobre 1991, Columbus, Ohio, US, Abstract n° 210570" évoque d'une façon générale les propriétés rhéologiques du 4-0-méthylglucuroxylane. Ses propriétés fongistatiques qui ont été mises en évidence par les inventeurs sont totalement inattendues et difficiles à expliquer à l'heure actuelle. Il est à noter que ce type de composé possède en outre des propriétés rhéologiques qui se traduisent par une intégration du composé dans la texture du milieu, conférant à ce dernier des propriétés fongistatiques durables. De plus, on a pu constater que ces composés améliorent de façon très sensible la résistance du milieu aux hydrolyses chimique et enzymatique, ce qui représente un avantage accessoire intéressant dans certaines applications. En outre, le glucuronoxylane accroît la viscosité du milieu en fonction croissante de la proportion ajoutée et cette propriété peut être utilisée pour conférer au milieu la rhéologie recherchée.

Ainsi, le procédé de traitement de l'invention permet de protéger un milieu vis-à-vis du développement des fongis, et ce par l'ajout d'un seul type de composé non toxique (la dose létale DL50 étant supérieure à 1 330 mg par kg de poids vif pour ces composés).

Les expérimentations ont montré que l'on obtient un bon résultat en utilisant un glucuronoxylane constitué par un mélange de fractions ayant des fréquences de substitution -n- différentes, la fraction correspondant à la fréquence n = 9 étant majoritaire en poids.

On peut avantageusement utiliser un glucuronoxylane dont l'acide ou le sel glucuronique est 4-0-méthylé.

L'on utilisera de préférence un glucuronoxylane dans lequel AU est un sel glucuronique de sodium, calcium ou magnésium, si l'on veut obtenir des milieux de viscosité élevée (gel).

Le glucuronoxylane utilisé dans le procédé de l'invention est en particulier extrait de coques de tournesol par traitement basique. Le procédé d'extraction peut notamment consister en une alternance de traitements oxydants et de lessivages basiques, suivie d'une extraction basique, d'une acidification et d'une précipitation au moyen d'un cosolvant, en vue d'obtenir après séchage une poudre de glucuronoxylane : cette poudre est mélangée au milieu à traiter après mise en solution aqueuse si ce milieu ne contient pas d'eau. Un tel procédé de fabrication peut être mis en oeuvre dans des conditions très analogues à celles du procédé décrit dans le brevet US 1.219.233 pour extraire des pentosanes d une matière végétale (constituée par des rafles et tiges de maïs).

Le procédé de l'invention est applicable dans la plupart des cas où un effet fongistatique est recherché, notamment dans les milieux aqueux : milieux aqueux alimentaires, produits de protection ou d'enduction de surface en dispersion aqueuse, colle à l'eau, produits d'encollage textile ("ensimage") ... Il peut être appliqué dans certains milieux non aqueux compatibles avec les milieux organiques (cosmétiques, encres ...).

L'invention s'étend donc aux applications comme additif alimentaire, additif pour produits de traitement de surface, ou additif pour produits d'encollage textile, des glucuronoxylanes de motif :

$$\ldots\ X - \underset{\substack{|\\ \mathrm{AU}}}{X} - X\ \ldots\ X - \underset{\substack{|\\ \mathrm{AU}}}{X} - X\ \ldots$$

dans lequel X est le xylose et AU un acide glucuronique ou un sel glucuronique, la fréquence -n- de substitution de la chaîne xylanique par l'acide glucuronique étant comprise entre 3 et 9.

Les exemples qui suivent illustrent le procédé de l'invention ainsi que les performances et résultats obtenus.

Exemple 1

Cet exemple a pour but de mettre en évidence le traitement selon l'invention et ses performances sur un milieu aqueux servant de test.

Le procédé utilisé pour extraire le glucuronoxylane des coques de tournesol met en jeu un enchaînement de 9 étapes, alternant des traitements à l'eau, à l'hypochlorite de sodium (température ambiante) et à la soude (température ambiante).

A la première étape, 50 g de coques de tournesol sont broyées et introduites dans un réacteur de 4 l contenant 2 l d eau ; l'ensemble est maintenu sous agitation à la température choisie (60° C). A la fin de cette étape, une filtration et un rinçage à l'eau sont effectués. La matière est alors récupérée et le filtrat écarté pour réaliser l'étape suivante : chaque étape est ensuite réalisée à 25° C de façon analogue avec les matières recueillies à l'étape précédente, au moyen des solutions de traitement suivantes ; le traitement peut se résumer :

1. gonflement de la matière à l'eau (2 l) pendant 15 mn à 62° C,
2. trempage dans une solution d'hypochlorite de sodium à 2 % pendant 1 heure (2 l),
3. trempage dans une solution de soude à 0,2 % pendant 4 heures (2 l),
4. trempage dans une solution d'hypochlorite de sodium à 2 % pendant 1 heure (2 l),
5. trempage dans une solution de soude à 0,2 % pendant 4 heures (2 l),
6. trempage dans une solution d'hypochlorite de sodium) à 1 % pendant 1 heure (2 l),
7. trempage dans une solution de soude à 0,2 % pendant 4 heures (2 l),
8. trempage dans une solution d'hypochlorite de sodium à 1 % pendant 1 heure (2 l),
9. trempage dans une solution de soude à 6 % pendant 2 heures (2 l).

A l'issue des neuf étapes, le filtrat est récupéré et la matière séchée. Le filtrat est alors acidifié jusqu'à pH = 4 avec de l'acide acétique, puis concentré sous pression réduite. La précipitation du glucuronoxylane s'effectue par addition d'éthanol (3V/V) ; le précipité est alors filtré, lavé à l'éthanol, puis séché à 50° C et pesé.

Le glucuronoxylane obtenu avec un rendement de 6 % est un sel glucuronoxylanique de sodium 4-0-méthylé contenant en poids 13 % de sel d'acide glucuronique ; il est constitué par un mélange de fractions dont la fréquence -n- s'étale entre 3 et 9 ; la fraction n = 9 est majoritaire et représente 60 % en poids de

l'ensemble pour les coques traitées au présent exemple.

Le milieu à traiter a été préparé comme un milieu de culture de "Sabouraud" particulièrement sensible au développement des fongis ; sa fluidité était analogue à celle de l'eau. Ce milieu est composé de :

- eau : 100 ml,
- peptone : 1 g,
- glucose : 2 g.

L'agar du milieu de "Sabouraud" est substitué par le glucuronoxylane fabriqué ci-dessus, qui est ajouté en proportion pondérale de 10 % dans le milieu ; un échantillon test à l'agar (sans glucuronoxylane) est conservé.

Le milieu est agité et chauffé jusqu'à dissolution (10 mn environ) ; après refroidissement lent, l'on obtient un gel qui est stérilisé et conservé en enceinte stérile.

Des échantillons du gel sont ensuite ensemencés par plusieurs types de fongis :

- échantillon a :
  Asperfillus (Fumigatus, Flaveus, Niger),
- échantillon b :
  Alternaria, (Alternata),
- échantillon c :
  Penicillium, (Chrysogenum, Restrictum, Decumbens,
- échantillon d:
  Cladosporium, (Cladosporioides).

Le développement fongique est observé et mesuré régulièrement sur une durée de huit jours. Le même ensemencement est effectué pour les échantillons-tests (à l'agar) afin d'établir une comparaison.

Les analyses microscopiques ont mis en évidence que dans les milieux à traiter, il y avait inhibition de la sporulation des fongis par atrophie des structures fongiques ; au contraire, pour les échantillons-tests, on a observé un développement et une croissance des fongis qui recouvraient le milieu dans sa totalité.

Exemple 2

Cet exemple reprend le mode opératoire de l'exemple précédent mais le traitement du milieu est effectué au moyen d'un glucuronoxylane différent qui est fabriqué par le procédé suivant.

L'extraction est effectuée à partir de 50 g de coques de tournesol broyées, par un traitement avec une solution de soude à 8 % à 40° C pendant 5 heures, le rapport matière/liquide étant de 80 g/l.

Le glucuronoxylane obtenu avec un rendement de 17 à 18 % est un sel glucuronoxylanique de sodium 4-0-méthylé, contenant en poids 8,5 % de sel d'acide glucuronique.

Les mêmes essais qu'à l'exemple 1 sont effectués avec des échantillons analogues et les mêmes propriétés fongistatiques peuvent être observées.

Exemple 3

Les glucuronoxylanes fabriqués à l'exemple 1 et à l'exemple 2 sont utilisés pour traiter de l'eau (eau stérilisée). L'addition de glucuronoxylane à l'eau a été effectuée à 10 % en poids d'une façon analogue à l'exemple 1 et conduit à un gel qui a été ensemencé par les souches de l'exemple 1. Des échantillons-tests dans lesquels le glucuronoxylane est remplacé par un autre épaississant (carboxyméthylcellulose), sont ensemencés de la même manière. On constate que la présence du carboxyméthylcellulose conduit à une prolifération fongique quelle que soit la souche, les milieux étant couverts de fongis dans leur totalité au bout de 8 jours. Au contraire, les milieux traités au glucuronoxylane sont exempts de fongis ; ce composé constitue donc un épaississant qui présente la propriété d'inhiber la multiplication des fongis, contrairement aux épaississants connus.

Exemple 4

Le glucuronoxylane fabriqué à l'exemple 1 est mis en solution aqueuse (0,5 % en poids) en présence d'une solution tampon d'acétate de sodium (pH : 5,8). Dix unités d'un mélange d'Endoxylanase et de Cellulase sont introduites dans le milieu à 60° C.

A titre comparatif, le carboxyméthylcellulose est soumis à l'attaque des mêmes enzymes dans les mêmes conditions.

Au bout de 24 heures, on constate une conversion enzymatique partielle faible pour le glucuronoxylane (plus faible pour les fractions à fréquence -n- petite). Le taux de conversion moyen est de 50 %.

Au contraire, pour le carboxyméthylcellulose, la conversion est totale (taux de conversion : 100 %) et ce composé est totalement détruit en unités monomères.

En conséquence, outre les propriétés fongistatiques illustrées à l'exemple 1, le glucuronoxylane obtenu présente d'intéressantes propriétés de résistance à l'hydrolyse enzymatique qui limitent les effets des attaques enzymatiques des milieux traités.

Exemple 5

Les glucuronoxylanes fabriqués aux exemples 1 et 2 sont mélangés à de l'eau à des proportions pondérales variables entre 1 % et 15 %. Le mélange est chauffé jusqu'à dissolution complète (60° C, quelques minutes), puis est refroidi à 0° C. On observe la gélification au-delà de 5 %. En-deçà, le milieu subit un épaississement, sa viscosité étant croissante en fonction du pourcentage. Les observations sont identiques pour les deux glucuronoxylanes testés.

Les propriétés fongistatiques sont étudiées pour les deux produits après gélification. On constate les mêmes propriétés fongistatiques que celles observées aux exemples 1 et 2.

De plus, le comportement rhéologique des gels (au-delà de 5 %) a été étudié à l'aide d'un rhéomètre à contrainte imposée du type "CARRI-MED CS". On note un comportement visco-élastique dont l'élasticité diminue avec le pourcentage de glucuronoxylane, alors que la viscosité augmente.

Chacun des gels étudiés est rhéofluidifiant avec un seuil d'écoulement d'autant plus élevé que la proportion de glucuronoxylane est plus forte. Le seuil d'écoulement pour la proportion de 10 % est égal à 15 Newtons/$m^2$.

Exemple 6

Le glucuronoxylane de l'exemple 1 a été dissous dans une solution de chaux à 4 % pour remplacer le contre-ion sodium par du calcium. Le milieu est acidifié, puis additionné d'éthanol pour récupérer le glucuronoxylane sous forme calcium.

La résistance au fongis est similaire au cas de l'exemple 1.

Le comportement rhéologique est étudié comme à l'exemple 5 et est similaire avec un épaississement plus important à proportion égale. On observe la gélification au-delà de 2 %.

**Revendications**

1. Procédé de traitement d'un milieu en vue d'inhiber la reproduction des fongis dans ledit milieu, caractérisé en ce que l'on mélange audit milieu une proportion pondérale comprise entre 1 % et 15 % de glucuronoxylane de motif :

$$\ldots X - \underset{\substack{|\\ AU}}{X} - X \ldots X - \underset{\substack{|\\ AU}}{X} - X \ldots$$

dans lequel X est le xylose et AU un acide glucuronique ou un sel glucuronique, la fréquence -n- de substitution de la chaîne xylanique par l'acide ou le sel glucuronique

$$\left(n = \frac{\text{nombre de X}}{\text{nombre de AU}}\right)$$

étant comprise entre 3 et 9, le glucuronoxylane étant ajouté au milieu à traiter sous la forme d'une solution aqueuse lorsque ledit milieu ne contient pas d'eau.

2. Procédé de traitement selon la revendication 1, caractérisé en ce que l'on utilise un glucuronoxylane constitué par un mélange de fractions ayant des fréquences de substitution -n- différentes, la fraction correspondant à la fréquence n = 9 étant majoritaire en poids.

3. Procédé de traitement selon l'une des revendications 1 et 2, caractérisé en ce que l'on ajoute le glucuronoxylane en proportion fonction croissante de la viscosité désirée.

4. Procédé de traitement selon l'une des revendications 1, 2 ou 3, caractérisé en ce que l'on utilise un glucuronoxylane dont l'acide ou le sel glucuronique est 4-O-méthylé.

5. Procédé de traitement selon l'une des revendications 1, 2, 3 ou 4, caractérisé en ce que l'on utilise un glucuronoxylane dans lequel AU est un sel glucuronique de sodium, calcium ou magnésium.

6. Procédé selon l'une des revendications précédentes, dans lequel ou utilise un glucuronoxylane extrait de coques de tournesol par traitement basique.

7. Procédé selon la revendication 6, dans lequel le glucuronoxylane est obtenu à partir des coques de tournesol par une alternance de traitements oxydants et lessivages basiques, suivie d'une extraction basique, d'une acidification et d'une précipitation au moyen d'un cosolvant, en vue d'obtenir après séchage une poudre de glucuronoxylane laquelle est mélangée au milieu à traiter après mise en solution aqueuse si ce milieu ne contient pas d'eau.

8. Application comme additif alimentaire destiné à inhiber la reproduction des fongis dans un milieu aqueux alimentaire, d'un glucuronoxylane de motif :

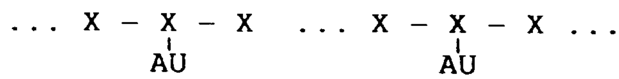

dans lequel X est le xylose et AU un acide glucuronique ou un sel glucuronique, la fréquence -n- de substitution de la chaîne xylanique par l'acide glucuronique étant comprise entre 3 et 9.

9. Application comme additif pour produits de traitement de surface en dispersion aqueuse destiné à inhiber la reproduction des fongis dans lesdits produits, d'un glucuronoxylane de motif :

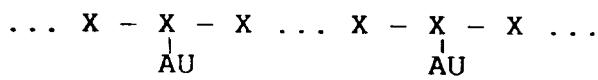

dans lequel X est le xylose et AU un acide glucuronique ou un sel glucuronique, la fréquence -n- de substitution de la chaîne xylanique par l'acide glucuronique étant comprise entre 3 et 9.

10. Application comme additif pour colles à l'eau destiné à inhiber la reproduction des fongis dans lesdits produits, d'un glucuronoxylane de motif :

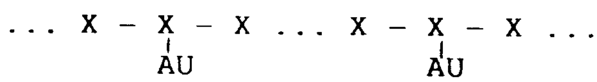

dans lequel X est le xylose et AU un acide glucuronique ou un sel glucuronique, la fréquence -n- de substitution de la chaîne xylanique par l'acide glucuronique étant comprise entre 3 et 9.

11. Application comme additif pour produits d'encollage textile destiné à inhiber la reproduction des fongis dans lesdits produits, d'un glucuronoxylane de motif :

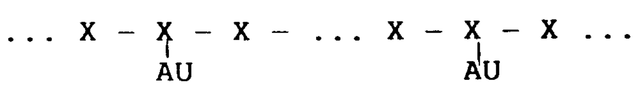

dans lequel X est le xylose et AU un acide glucuronique ou un sel glucuronique, la fréquence -n- de substitution de la chaîne xylanique par l'acide glucuronique étant comprise entre 3 et 9.

## Claims

**1.** Method for treatment of a medium with a view to inhibiting the reproduction of fungi in said medium, characterised in that a proportion by weight between 1% and 15% of glucuronoxylan having the configuration:

```
... X - X - X ... X - X - X ...
        |             |
        A             AU
```

is mixed with said medium, X in the above configuration being xylose and AU a glucuronic acid or a glucuronic salt, whereby the frequency -n- with which the xylan chain is substituted by the glucuronic acid or salt (n = number of X/number of AU) amounts to between 3 and 9 and the glucuronoxylan is added to the medium to be treated in the form of an aqueous solution if said medium does not contain water.

**2.** Method of treatment according to Claim 1, characterised in that use is made of a glucuronoxylan constituted by a mixture of fractions with different substitution frequencies -n-, with the fraction corresponding to the frequency n = 9 predominating in terms of weight.

**3.** Method of treatment according to one of Claims 1 and 2, characterised in that the glucuronoxylan is added in a proportion which increases with the required viscosity.

**4.** Method of treatment according to one of Claims 1, 2 or 3, characterised in that use is made of a glucuronoxylan, the glucuronic acid or salt of which is 4-O-methylated.

**5.** Process of treatment according to one of Claims 1, 2, 3 or 4, characterised in that use is made of a glucuronoxylan in which AU is a glucuronic salt of sodium, calcium or magnesium.

**6.** Method according to one of the aforementioned claims in which use is made of a glucuronoxylan extracted from sunflower husks by basic treatment.

**7.** Method according to Claim 6 in which the glucuronoxylan is obtained from sunflower husks by an alternation of oxidising treatments and basic lixiviation, said alternation being followed by a basic extraction, an acidification and a precipitation with the aid of a cosolvent in order to obtain, after drying, a glucuronoxylan powder which is mixed with the medium to be treated after preparing an aqueous solution of said medium if said medium does not contain water.

**8.** Application of a glucuronoxylan having the configuration:

```
... X - X - X ... X - X - X ...
        |             |
        AU            AU
```

by way of alimentary additive with a view to inhibiting the reproduction of fungi in an aqueous alimentary medium whereby X is xylose and AU a glucuronic acid or a glucuronic salt and the frequency -n- with which the xylan chain is substituted by glucuronic acid amounts to between 3 and 9.

**9.** Application of a glucuronoxylan having the configuration:

```
... X - X - X ... X - X - X ...
        |             |
        AU            AU
```

by way of additive for surface treatment products in aqueous dispersion with a view to inhibiting the reproduction of fungi in said products, whereby X is xylose and AU a glucuronic acid or a glucuronic salt and the frequency -n- with which the xylan chain is substituted by glucuronic acid amounts to between 3 and 9.

**10.** Application of a glucuronoxylan having the configuration:

```
... X - X - X ... X - X - X ...
        |             |
        AU            AU
```

by way of additive for water-based adhesives with a view to inhibiting the reproduction of fungi in said products whereby X is xylose and AU a glucuronic acid or a glucuronic salt and the frequency -n- with which the xylan chain is substituted by glucuronic acid amounts to between 3 and 9.

**11.** Application of a glucuronoxylan having the configuration:

```
... X - X - X - ... X - X - X ...
        |               |
        AU              AU
```

by way of additive to textile sizing products with a view to inhibiting the reproduction of fungi in said products whereby X is xylose and AU a glucuronic acid or a glucuronic salt and the frequency -n- with which the xylan chain is substituted by glucuronic acid amounts to between 3 and 9.

**Patentansprüche**

**1.** Verfahren zur Behandlung eines Mediums zwecks Hemmung der Fortpflanzung von Pilzen in dem besagten Medium, dadurch gekennzeichnet, daß man dem besagten Medium einen Gewichtsanteil zwischen 1% und 15% von Glucuronoxylan der Konfiguration

```
... X - X - X ... X - X - X ...
        |             |
        AU            AU
```

beimischt, wobei X Xylose und AU eine Glucuronsäure oder ein Glucuronsalz ist, während die Frequenz -n-, mit der die Xylankette durch die Glucuronsäure bzw. das Glucuronsalz substituiert ist (n = Anzahl X/Anzahl AU) zwischen 3 und 9 beträgt und das Glucuronoxylan dem zu behandelnden Medium in der Form einer wässerigen Lösung zugesetzt wird, falls das besagte Medium kein Wasser enthält.

**2.** Behandlungsverfahren nach Anspruch 1, dadurch gekennzeichnet, daß von einem Glucuronoxylan Gebrauch gemacht wird, das aus einem Gemisch von Fraktionen mit verschiedenen Substitutionsfrequenzen -n- besteht, wobei die der Frequenz n = 9 entsprechende Fraktion gewichtsmäßig überwiegt.

3. Behandlungsverfahren nach einem der Ansprüche 1 und 2, dadurch gekennzeichnet, daß das Glucuronoxylan in einem mit der gewünschten Viskosität zunehmenden Verhältnis zugesetzt wird.

4. Behandlungsverfahren nach einem der Ansprüche 1, 2 oder 3, dadurch gekennzeichnet, daß von einem Glucuronoxylan Gebrauch gemacht wird, bei dem die Glucuronsäure bzw. das Glucuronsalz 4-O-methyliert ist.

5. Behandlungsverfahren nach einem der Ansprüche 1, 2, 3 oder 4, dadurch gekennzeichnet, daß von einem Glucuronoxylan Gebrauch gemacht wird, bei dem AU ein Glucuronsalz von Natrium, Calcium oder Magnesium ist.

6. Verfahren nach einem der vorstehenden Ansprüche, bei dem von einem aus Sonnenblumenschalen durch basische Behandlung extrahierten Glucuronoxylan Gebrauch gemacht wird.

7. Verfahren nach Anspruch 6, bei dem das Glucuronoxylan aus Sonnenblumenschalen gewonnen wird, und zwar durch wechselweise Durchführung von Oxidisationsbehandlungen und basischen Auslaugungen, gefolgt von einer basischen Extraktion, einer Säuerung und einer Fällung mit Hilfe eines Mitlösungsmittels, um nach Trocknung ein Glucuronoxylanpulver zu erzielen, das dem zu behandelnden Medium beigemischt wird, nachdem dieses in wässerige Lösung gebracht wurde, falls das besagte Medium kein Wasser enthält.

8. Anwendung eines Glucuronoxylans der Konfiguration:

```
... X - X - X ... X - X - X ...
        |             |
        AU            AU
```

als Lebensmittelzusatz zwecks Hemmung der Fortpflanzung von Pilzen in einem wässerigen Lebensmittelmedium, wobei in der besagten Konfiguration X Xylose und AU eine Glucuronsäure oder ein Glucuronsalz ist, wobei die Frequenz -n-, mit der die Xylankette durch die Glucuronsäure substituiert ist, zwischen 3 und 9 beträgt.

9. Anwendung eines Glucuronoxylans der Konfiguration:

```
... X - X - X ... X - X - X
        |             |
        AU            AU
```

als Zusatz für in wässeriger Dispersion befindliche Oberflächenbehandlungsprodukte zwecks Hemmung der Fortpflanzung von Pilzen in den besagten Produkten, wobei in der besagten Konfiguration X Xylose und AU eine Glucuronsäure oder ein Glucuronsalz ist, wobei die Frequenz -n-, mit der die Xylankette durch die Glucuronsäure substituiert ist, zwischen 3 und 9 beträgt.

10. Anwendung eines Glucuronoxylans der Konfiguration:

```
... X - X - X ... X - X - X ...
        |             |
        AU            AU
```

als Zusatz zu auf Wasser basierenden Klebstoffen zwecks Hemmung der Fortpflanzung von Pilzen in den besagten Produkten, wobei in der besagten Konfiguration X Xylose und AU eine Glucuronsäure oder ein Glucuronsalz ist, wobei die Frequenz -n-, mit der die Xylankette durch die Glucuronsäure substituiert ist, zwischen 3 und 9 beträgt.

**11.** Anwendung eines Glucuronoxylans der Konfiguration:

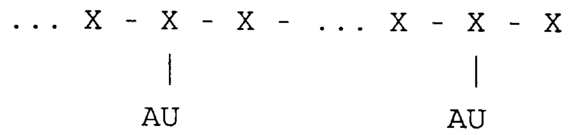

als Zusatz zu Textilienschlichtprodukten zwecks Hemmung der Fortpflanzung von Pilzen in den besagten Produkten, wobei in der besagten Konfiguration X Xylose und AU eine Glucuronsäure oder ein Glucuronsalz ist, wobei die Frequenz -n-, mit der die Xylankette durch die Glucuronsäure substituiert ist, zwischen 3 und 9 beträgt.

Fig 1

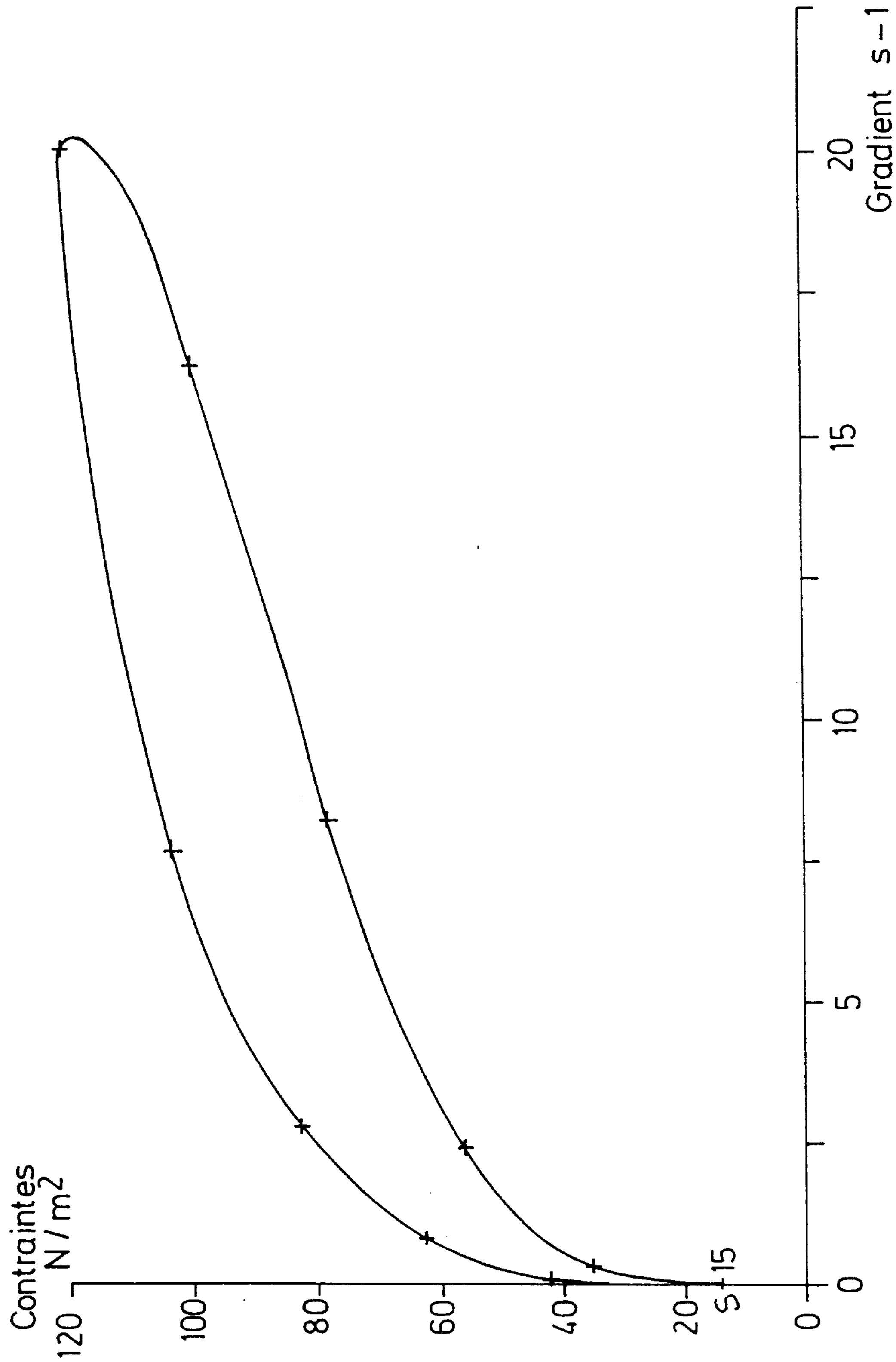
Contraintes
N / m2
120
100
80
60
40
20
S
15
0
0
5
10
15
20
Gradient s−1